Europäisches Patentamt

European Patent Office

Office européen des brevets

(19)

(11) Numéro de publication: **0 141 714**
**B1**

(12) # FASCICULE DE BREVET EUROPÉEN

(45) Date de publication du fascicule du brevet:
20.05.87

(21) Numéro de dépôt: **84402077.6**

(22) Date de dépôt: **16.10.84**

(51) Int. Cl.⁴: **G 02 B 26/02,** G 02 B 5/24

(54) **Modulateur optique.**

(30) Priorité: **21.10.83 FR 8316794**

(43) Date de publication de la demande:
**15.05.85 Bulletin 85/20**

(45) Mention de la délivrance du brevet:
**20.05.87 Bulletin 87/21**

(84) Etats contractants désignés:
**DE GB NL SE**

(56) Documents cité:
**GB-A-1 494 150**
**US-A-3 904 868**

**APPLIED PHYSICS LETTERS, vol. 40, no. 1, janvier 1982, pages 4-6, American Institute of Physics, New York, US; J.L. JACKEL et al.: "Electrowetting optical switch"**
**PATENTS ABSTRACTS OF JAPAN, vol. 5, no. 52(P-56) 724 , 11 avril 1981**

(73) Titulaire: **THOMSON- CSF, 173, Boulevard Haussmann, F-75379 Paris Cedex 08 (FR)**

(72) Inventeur: **Le Pesant, Jean- Pierre, THOMSON-CSF SCPI 173, bld Haussmann, F-75379 Paris Cedex 08 (FR)**
Inventeur: **Mourey, Bruno, THOMSON- CSF SCPI 173, bld Haussmann, F-75379 Paris Cedex 08 (FR)**
Inventeur: **Hareng, Michel, THOMSON- CSF SCPI 173, bld Haussmann, F-75379 Paris Cedex 08 (FR)**
Inventeur: **Perbet, Jean- Noel, THOMSON- CSF SCPI 173, bld Haussmann, F-75379 Paris Cedex 08 (FR)**

(74) Mandataire: **Lepercque, Jean, THOMSON- CSF SCPI 19, avenue de Messine, F-75008 Paris (FR)**

## Description

L'invention concerne un modulateur optique et plus particulièrement un atténuateur achromatique notamment pour les objectifs de caméras et de guidage.

Il existe différents types de dispositifs permettant d'atténuer l'intensité de la lumière. C'est ainsi que l'on trouve les atténuateurs à déplacement mécanique de dispositifs optiques bien connus dans la technique, les atténuateurs par dépôt électrochimique d'un métal sur les parois conductrices transparentes d'une cuve électrolytique, les atténuateurs par réduction ou oxydation de couches minces de métal, et les atténuateurs utilisant l'effet d'un champ électrique dans un mélange de cristal liquide et de colorant dichroïque.

L'objet de l'invention est de proposer un modulateur utilisant un autre procédé et applicable notamment dans les viseurs de poursuite. Ce type d'application nécessite en effet une forte dynamique de transmission, supérieure à 20 db, pour compenser les variations d'éclairement environnant, qui peuvent être brusques, et une transmission élevée dans l'état ouvert pour permettre la détection de la lumière réfléchie par la cible. En outre, les caractéristiques techniques spécifiques du dispositif de détection demandent une bande passante spectrale comprise entre 0,4 et 1,1 microns et une distorsion de l'image aussi faible que possible.

Dans le cadre de l'invention, on propose d'utiliser les mouvements de lames de liquides de faible épaisseur, commandés électriquement, sans intervention d'organes mécaniques mobiles, pour modifier les conditions de réfraction et d'absorption rencontrées par un faisceau lumineux qui traverse le dispositif d'atténuation.

La demande de brevet français publiée le 28 septembre 1984 sous le numéro 2.543.320 décrit un dispositif permettant de déplacer une lame de liquide. Un tel dispositif comporte un espace capillaire délimité par deux plaques de confinement dont les faces internes sont munies d'électrodes et permettent d'appliquer un champ électrique dans l'espace capillaire. Celui-ci contient deux fluides non miscibles de permittivités diélectriques différentes. L'application d'une tension entre les électrodes donne lieu à un champ électrique attirant le fluide de plus forte permittivité. Le phénomène physique est celui bien connu du remplissage d'un condensateur par un liquide diélectrique sous l'effet de l'établissement de gradients de champ électrique et d'une variation de l'énergie électrostatique.

Le contrôle de position des fluides dans l'espace capillaire est obtenu d'une part par le choix des champs électriques appliqués et, d'autre part, par des traitements de surface spécifiques qui rendent les surfaces des électrodes plus mouillantes que les surfaces qui les environnent. Par exemple, dans le cas d'électrodes transparentes d'oxydes métalliques, tels que l'oxyde d'indium et d'étain, gravées sur verre, un dépôt d'une couche monomoléculaire polymérisée d'organo silane est réalisé.

L'invention fournit donc un système mettant en oeuvre le phénomène ainsi décrit de déplacement d'un liquide.

Elle a pour objet un modulateur optique d'un faisceau lumineux utilisant des cellules de déplacement de fluides par commande électrique constitués de deux lames transparentes parallèles délimitant un espace capillaire relié à un réservoir contenant au moins un fluide, ainsi que des dispositifs d'application de champs électriques permettant de commander le déplacement du liquide entre le réservoir et l'espace capillaire, caractérisé en ce qu'il comprend: au moins une cellule d'un premier type dont les lames transparentes sont placées perpendiculairement à la direction du faisceau, l'espace capillaire étant dans la section du faisceau et le fluide de la cellule étant absorbant; des moyens de mesure de l'intensité du faisceau lumineux fournissant à chaque instant un signal de mesure proportionnel à l'intensité du faisceau lumineux; ainsi que des moyens de commande des dispositifs d'application de champs électriques connectés aux moyens de mesure, recevant le signal de mesure et fournissant en réponse un signal permettant de commander les dispositifs d'application de champs électriques.

L'invention sera mieux comprise au moyen de la description ci-après et des figures annexées parmi lesquelles:
- la figure 1 est une vue isométrique explicative d'un dispositif connu à déplacement de liquide;
- les figures 2, 3 et 4 sont des vues explicatives d'un atténuateur optique selon l'invention;
- la figure 5 représente un exemple de réalisation selon l'invention;
- la figure 6 représente une variante d'un exemple de réalisation selon l'invention;
- la figure 7 représente une vue isométrique d'un exemple de réalisation selon l'invention;
- la figure 8 représente une vue isométrique d'une variante de réalisation selon l'invention;
- la figure 9, est une vue isométrique simplifiée d'un exemple d'association de cellules selon l'invention.

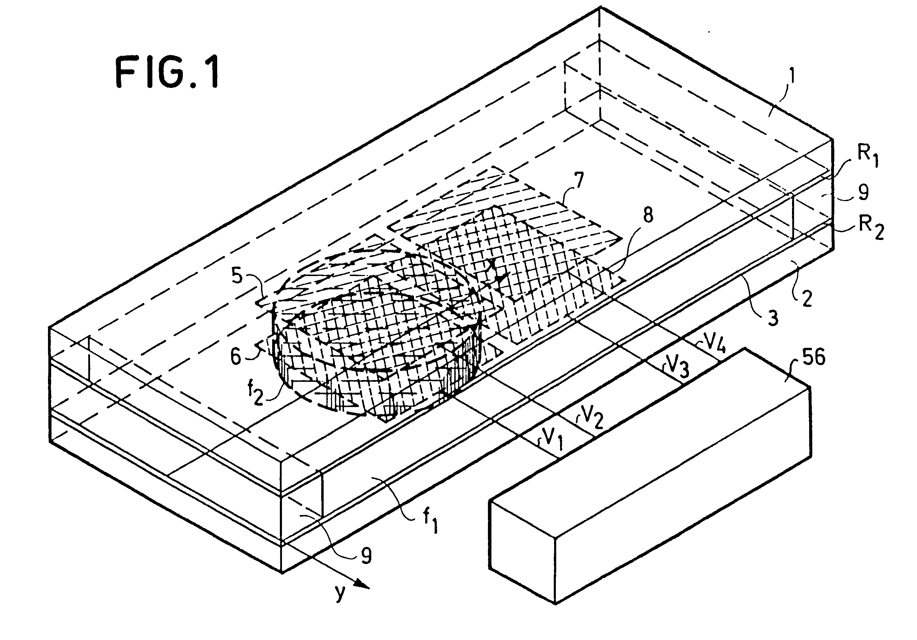

Un dispositif électrique de déplacement de globules, tel que représenté par la vue isométrique de la figure 1, comporte deux lames 1 et 2 transparentes séparées par des entretoises 9. Elles délimitent ainsi un espace capillaire 3 rempli de deux fluides $f_1$ et $f_2$. Sur les faces des lames 1 et 2, délimitant l'espace capillaire 3, sont déposées en vis-à-vis deux groupes d'électrodes 5-6 et 7-8. Un générateur électrique 56 fournit à la demande des différences de potentiel sur les fils $V_1$ et $V_2$, d'une part, vers les électrodes 5-6, et $V_3$ et $V_4$, d'autre part, vers les électrodes 7-8. Ces différences de potentiel peuvent être de l'ordre de 100 à 300 volts pour créer des champs électriques de déplacement de l'ordre de $5.10^6$ à $6.10^7$ volts par mètre.

Le fluide $f_1$ est, par exemple, de l'air. Le fluide $f_2$ peut être choisi parmi les hydrocarbures tels que des alcanes comprenant 5 à 25 atomes de carbone, des cétones (acétone, cyclohexanone, méthyléthylcétone) ou des dérivés nitrés (nitrobenzène, nitrotoluène).

L'utilisation de mélanges de liquides pour constituer le fluide f2 permet de contrôler la tension superficielle, d'éviter la dislocation des globules lors de leur déplacement et d'optimiser le temps de réponse du dispositif aux commandes électriques.

Le fluide f2 a la forme d'un globule. Il se trouve pincé entre les lames 1 et 2. Son volume est tel que placé entre les électrodes 5 et 6, comme représenté sur la figure 1, il déborde légèrement le contour des électrodes. Il pourrait également être plus volumineux et empiéter sur le couple d'électrodes 7 et 8.

Pour faire passer le globule f2 de l'espace interélectrodes 5-6 à l'espace interélectrodes 7-8, on applique aux électrodes 7-8 une différence de potentiel V3-V4 supérieure à la différence de potentiel V1-V2. Pour faire revenir le globule à sa position d'origine on effectue l'opération inverse. Si des différences de potentiel égales sont appliquées en même temps, ou si aucune différence de potentiel n'est appliquée, le globule f2 ne tend pas à se déplacer.

On va maintenant décrire le modulateur optique de l'invention mettant en oeuvre le procédé de déplacement de liquide précédemment décrit.

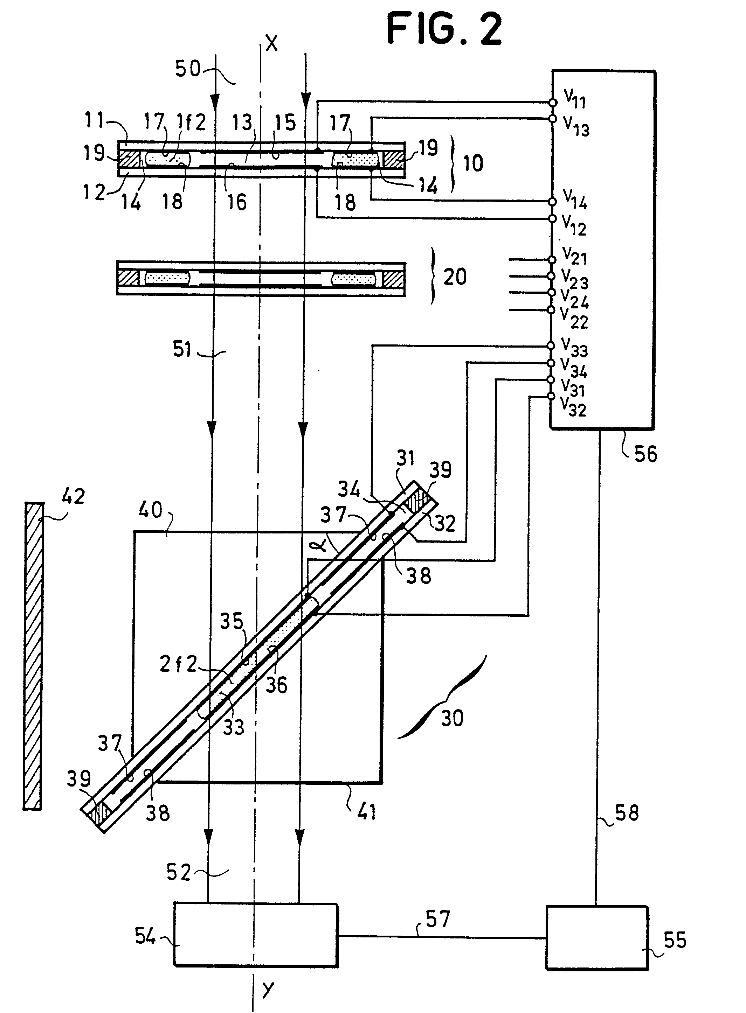

Le modulateur de la figure 2 comporte un premier type de cellules telles que 10 et 20, un deuxième type de cellules telles que 30, un appareil de mesure d'intensité lumineuse 54, un circuit de commande 55, un générateur de tensions 56.

La cellule 10 comporte deux lames transparentes 11 et 12 maintenues écartées parallèlement l'une de l'autre par des entretoises 19. Sur les faces internes des lames 11 et 12 sont déposées des électrodes centrales 15 et 16 qui délimitent un volume 13 qu'on appellera espace capillaire. De part et d'autre de ces électrodes 15 et 16 sont déposées des électrodes 17 et 18. Les couples d'électrodes 17-18 délimitent également des volumes 14 qu'on appellera réservoirs.

Entre les lames 11 et 12 est placé un fluide 1f2. Ce fluide a une composition telle qu'il possède un taux d'absorption de la lumière déterminé. Sur la figure 2 ce fluide est réparti dans les réservoirs 14. L'espace capillaire contient un autre fluide tel que de l'air.

Les électrodes 15 et 16 sont connectées respectivement aux sorties V1 et V2 d'un générateur de tension 56. Les électrodes 17, situées de part et d'autre de l'électrode 15, sont connectées entre-elles par des connexions non représentées et sont connectées à une sortie V3 de générateur 56. Il en est de même pour les électrodes 18 qui sont connectées à la sortie V4 du générateur 56.

La cellule 20 est de constitution analogue à celle de la cellule 10. On ne la décrira donc pas. Ses électrodes sont connectées de la même façon par des liaisons non représentées à des sorties V21 à V24 du générateur 56.

La cellule 30 comporte deux lames transparentes 31 et 32 maintenues parallèlement par des entretoises 39 et portant des électrodes centrales 35 et 36 ainsi que des électrodes périphérique 37 et 38. Les électrodes 35 et 36 délimitent un espace capillaire 33.

Les électrodes 37 et 38 délimitent des réservoirs 34. Entre les lames 31 et 32 est placé un fluide 2f2 transparent et d'indice de réfraction sensible ment le même que celui des lames 31 et 32. Sur la figure 2, ce fluide 2f2 est placé dans l'espace capillaire 33.

Les lames 31 et 32 sont inclinées selon un angle $\alpha$, de $\frac{\pi}{4}$ radians par exemple, par rapport aux lames des cellules 10. Elles sont placées entre deux prismes 40 et 41 de section rectangle isocèle disposés tête-bêche. L'indice de réfraction des prismes 40 et 41 est égal à celui des lames 31 et 32 et du fluide 2f2.

Les connexions électriques des électrodes de la cellule 30 sont analogues à celles de la cellule 10, avec les électrodes 35, 36, 37, 38 connectéesrespectivement aux sorties V31, V32, V33, V34.

Un écran absorbant 42 est disposé face à la lame 31, faisant avec cette lame un angle dièdre de valeur $\frac{\pi}{2}\alpha$, soit un angle $\frac{\pi}{4}$ radians selon l'exemple pris.

Les cellules 10, 20 et 30 sont alignées selon un axe XY passant par le centre des espaces capillaires (13, 33) des cellules.

Selon cet axe XY est placé un appareil de mesure d'intensité lumineuse 54. Cet appareil est connecté, par une liaison 57, à un circuit de commande 55, lui même connecté au générateur 56 par une liaison 58.

Les fluides des cellules 10, 20, 30 occupant les positions indiquées sur la figure 2, si un faisceau 50 est envoyé selon l'axe XY à la cellule 10, il est transmis, sans déviation ni pratiquement d'atténuation, par les cellules 10 et 20. Le faisceau 51 transmis par la cellule 20 est également transmis par la cellule qui fait office de lame parallèle en raison de la présence du fluide 2f2 dans l'espace capillaire et des valeurs égales (ou suffisamment voisines pour qu'il n'y ait pas réflexion totale) des indices de réfraction des lames 31, 32 des prismes 40, 41 et du fluide 2f2. Le faisceau 52 émergeant du prisme 41 est reçu par un appareil de mesure d'intensité lumineuse 54. Celui-ci fournit sur la liaison un signal de mesure proportionnel à l'intensité lumineuse du faisceau 52. Selon la valeur de ce signal le circuit de commande 55 fournit un signal de commande sur la liaison 58. Le générateur 56 applique alors sur ses sorties V11 à V31 des tensions de commande appropriées pour commander les cellules 10, 20, 30.

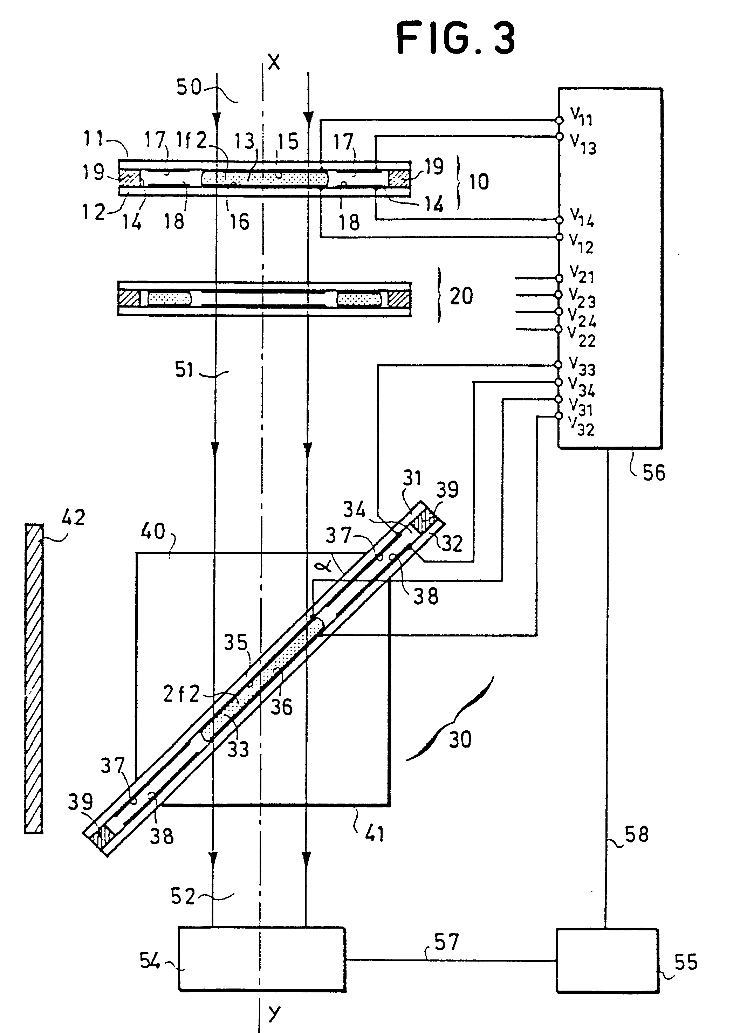

C'est ainsi que l'application d'une différence de potentiel entre les sorties V11 et V12, vers les électrodes 15 et 16, supérieure à celle appliquée entre les sorties V13 et V14, donne lieu, dans l'espace capillaire 13 de la cellule 10, à un champ électrique supérieur à celui régnant dans les réservoirs 14. Le fluide 1f2 des réservoirs 14 se déplace vers l'espace capillaire 13. Il prend la position représentée en figure 3.

Aucune tension n'est appliquée aux sorties V21 à V32. Les fluides des cellules 20 et 30 ne se déplacent donc pas.

Le modulateur de l'invention devient donc tel que représenté en figure 3. Un faisceau lumineux 50 reçu par la cellule 10 selon l'axe XY est en partie absorbé par le fluide 1f2 en raison de son taux d'absorption de la lumière. La cellule 10 transmet donc un faisceau lumineux atténué. La cellule 20 transmet un faisceau 51 sans atténuation. Il en est de même de la cellule 30 comme cela a été décrit précédemment. Le faisceau 52 émergeant du modulateur optique a donc été atténué.

Si l'intensité lumineuse de ce faisceau est trop élevée, le circuit de commande 55 peut, selon la valeur du signal fournit par l'appareil de mesure, commander le générateur 56 de façon à ce qu'il applique une tension de commande sur les sorties V21 et V22 vers les électrodes centrales de la cellule 20. Le fluide de cette cellule se déplace et prend la même position que le fluide de la cellule 10. Le faisceau lumineux 50 après avoir été atténué par la cellule 10 est à nouveau atténué par la cellule 20 et est transmis par la cellule 30. On obtient une atténuation supérieure à l'atténuation précédente.

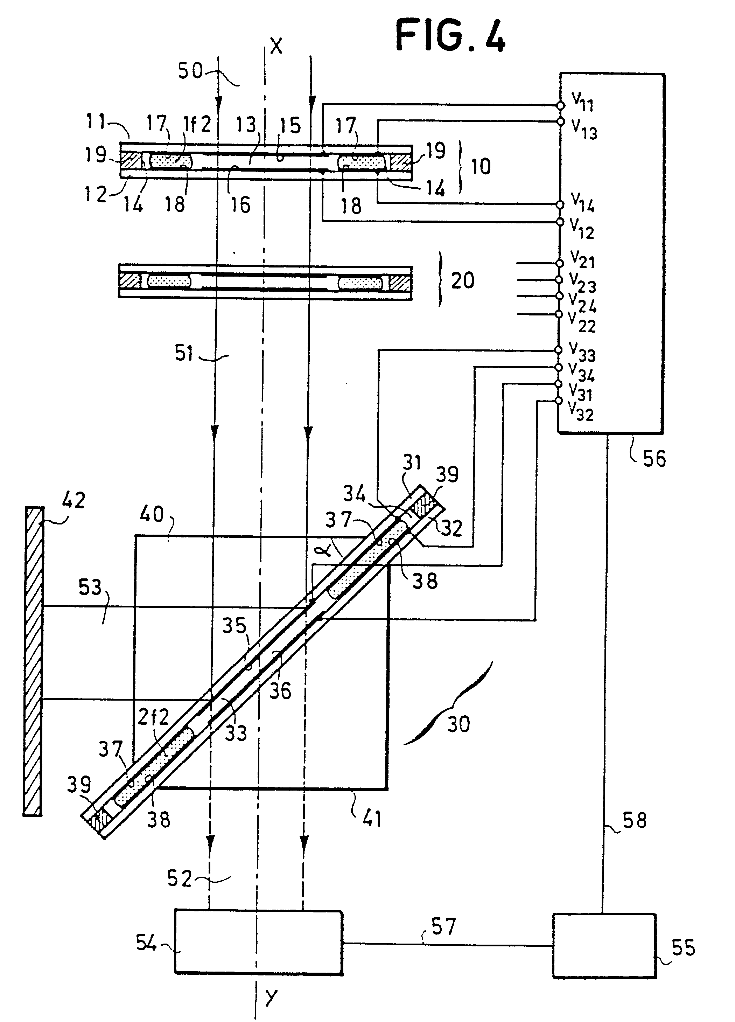

Si l'atténuation du faisceau lumineux doit être plus forte, le circuit de commande fournit un signal sur la liaison 58 tel que le générateur 56 applique une tension entre les sorties V33 et V34 supérieure à la tension entre les sorties V31 et V32. Le champ électrique entre les électrodes 37 et 38 de la cellule 30 attire le fluide 2f2 dans les réservoirs 34 situés de part et d'autre de l'espace capillaire. La cellule 30 passe dans l'état représenté en figure 4.

Un faisceau 51 atteint alors la lame 31 de la cellule 30 et en l'absence du fluide 2f2, il est réfléchi en quasi totalité par la face interne de la lame, sous la forme d'un faisceau 53, vers le panneau absorbant 42. Néanmoins, une faible partie du faisceau incident 51 est transmise et un faisceau 52 de faible intensité émerge du modulateur.

On remarque sur la figure 4 que les cellules 10 et 20 ont été représentées avec leur fluide placé dans les réservoirs. Elles ne jouent donc pas le rôle d'absorption. Cela n'est, en effet, pas utile en raison de l'atténuation importante apportée dans ce cas par la cellule 30. Pour mettre le modulateur optique dans cet état, le circuit de commande 55, en commandant le générateur 56 pour qu'il applique une tension aux électrodes 37 et 38, doit donc également donner l'ordre au générateur 56 d'appliquer une tension aux sorties V13, V14 et V23, V24 connectées aux électrodes telles que 17 et 18 de la cellule 10. Le fluide des cellules 10 et 20, s'il se trouve dans leur espace capillaire, est attiré dans les réservoirs.

Sur les figures 2 à 4 on n'a représenté que deux cellules 10 et 20 du type contenant un fluide absorbant. Pour augmenter le nombre de grades d'atténuation, et améliorer la souplesse du modulateur on aura intérêt à prévoir, en série sur la direction XY du faisceau lumineux, un nombre supérieur de cellules que l'on pourra commander en totalité ou en partie.

Dans chacune de ces cellules, l'espace utile pour la modulation du faisceau lumineux est l'espace capillaire. Dans certaines applications l'encombrement des réservoirs de part et d'autre des cellules peut être un inconvénient et on a intérêt à réduire cet encombrement. On prévoit alors des épaisseurs de réservoirs supérieures à l'épaisseur des espaces capillaires.

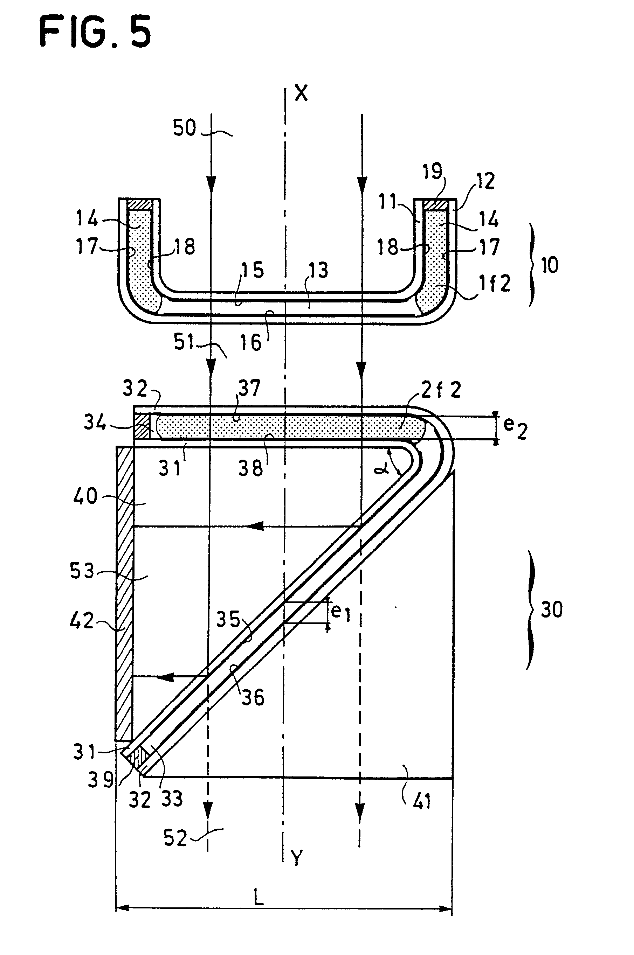

On prévoit également comme c'est le cas sur la figure 5, de disposer les reservoirs d'une cellule du type contenant un liquide absorbant, telle que ceux de la cellule 10, parallèlement à la direction XY du faisceau lumineux 50. Les lames 11 et 12 ont été recourbées perpendiculairement au plan de la cellule. L'épaisseur des réservoirs a été prévue supérieure à l'épaisseur de l'espace capillaire de façon à les rendre plus compacts.

Les électrodes 17 et 18 encadrant les réservoirs épousent la courbure des lames 11 et 12 pour faciliter l'amorçage du déplacement du fluide 1f2. Comme dans la description des figures 2 à 4, lorsque le fluide 1f2 est dans les réservoirs, la cellule transmet un faisceau sans absorption; lorsque le fluide est dans l'espace capillaire 13, la cellule est absorbante.

En ce qui concerne la cellule 30, les lames 31 et 32 sont repliées selon un angle $\alpha$, de $\frac{\pi}{4}$ radians par exemple. Elles délimitent un espace capillaire 33 incliné par rapport à l'axe XY et un réservoir 34 prependiculaire à l'axe XY.

Lorsque le fluide 2f2 est attiré, par les électrodes 35 et 36, dans l'espace capillaire 33, le faisceau lumineux 51 n'est toujours pas dévié par le réservoir 34 qui contient alors de l'air. Ce faisceau lumineux atteint l'espace capillaire 33 qui, contenant le fluide 2f2, le transmet le faisceau lumineux comme dans le cas décrit en relation avec la figure 2.

Les épaisseurs de l'espace capillaire 33 et du réservoir 34 ont été choisies telles que sur la direction XY, la distance el comprise entre les deux lames 31 et 32 soit égale à l'épaisseur e2. Que le fluide se trouve dans l'espace capillaire 33 ou dans le reservoir 34, un faisceau lumineux lors de sa transmission par la cellule 30 traversera la même épaisseur de fluide 2f2 et d'air. Les trajets optiques ne seront donc pas modifiés en transmission.

Les dimensions du réservoir 33 sont calculées, compte-tenu de l'épaisseur e2 pour contenir la totalité du fluide 2f2.

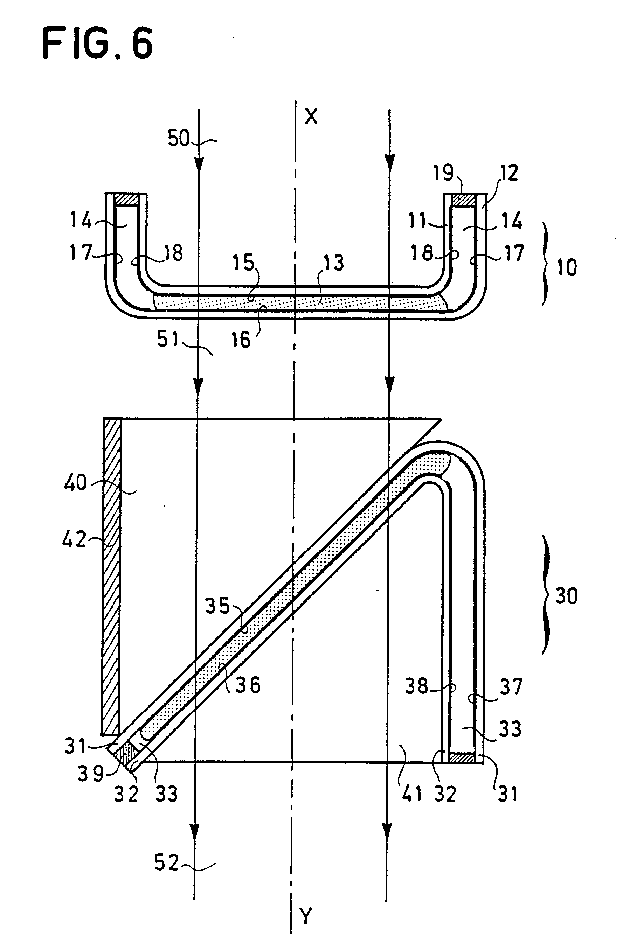

En se reportant à la figure 6 on va décrire une variante du modulateur de la figure 5. Selon cette variante, la cellule 10 est inchangée. Par contre, la cellule 30, réalisée de façon analogue à la cellule de la figure 5, a son réservoir 33 disposé parallèlement à l'axe XY. Un faisceau lumineux traversant la cellule ne traversera donc pas le réservoir 33.

Selon un mode de réalisation préféré, et à titre d'exemple non limitatif, les lames de verre des cellules sont en verre d'indice de réfraction 1,5 et d'épaisseur 1,5 mm. Les entretoises (19-39) sont découpées dans un film en polymère, par exemple un film de "MYLAR" ou de "KAPTON", marques déposées de la firme DU PONT DE NEMOURS. L'épaisseur des entretoises doit être inférieure à 1 mm pour que les phénomènes de capillarité des fluides prennent le pas sur les forces gravitationnelles. Pour régler l'épaisseur des espaces capillaires on prend des entretoises de 5 µm à 50 µm, et pour les réservoirs, des entretoises de 10 à 200 µm. Le collage des lames par l'intermédiaire des entretoises rend étanche la cellule.

Avant assemblage, les lames de verres sont équipées de leurs électrodes déposées et gravées selon les techniques de microlithographie. Les électrodes sont constituées de dépôts d'oxyde d'indium et d'étain, par exemple du type BALTRACON, commercialisé par la société BALZERS. Un recuit à 350°C permet de les rendre transparentes à la lumière. La représentation des électrodes sur les figures annexées a été simplifiée mais on précise que l'intervalle séparant deux électrodes d'une même lame, les électrodes 16 et 17 par exemple, doit être de faible largeur, de l'ordre de 20 µm. De plus, comme celà est décrit dans le brevet français publiée le 4 janvier 1985 sous le numéro 2.548.431, deux électrodes d'une même lame peuvent avoir des contours dentelés s'interpénétrant. Celà permet un déplacement plus aisé du liquide entre les électrodes.

Après que les électrodes aient été déposées sur les plaques 1 et 2, des dépôts, tels que R1 et R2 sur la figure 1, sont effectués. Ces dépôts très minces ont une épaisseur de l'ordre de 10 nanomètres. On peut utiliser par exemple un dépôt d'organo silane, notamment d'alkylméthoxysilane, et en particulier le N,N-diméthyle-N-octadécycle-3-aminopropyltriméthoxysilyl chlorure. Ce dépôt est polymérisé sous azote à 110° après hydrolyse des groupements méthoxysilane et formation par chemisorbtion sur le substrat de laisons hydrogène et siloxane. Du fait de la minceur de ces traitements de surface, on observe une plus grande mouillabilité là où le dépôt organique recouvre des électrodes. Les polymères fluorés peuvent également constituer des surfaces de confinement non mouillantes. En ce qui concerne les fluides 1f2 et 2f2, on les choisira pour que leur permittivité diélectrique soit différente de celle du fluide $f_1$ qui peut être tout simplement de l'air comme mentionné précédemment. Par ailleurs, il est avantageux que le liquide à déplacer soit peu corrosif et peu conducteur de l'électricité. On a utilisé avec succès les liquides de remplissage suivants:

liquide permittivité conductivité

électrique ($\Omega^{-1}$ cm$^{-1}$)
Cyclohexanone 18,3 x$^\varepsilon$ o 5.10$^{-18}$
Nitrobenzene 34,8 x$^\varepsilon$ o 2.10$^{-10}$
Hexane 1,88 x$^\varepsilon$ o 10$^{-16}$

pour le fluide 1f2, on mélange des colorants le rendant absorbant dans un spectre de longueur d'ondes correspondant au domaine d'utilisation du modulateur. On peut ainsi couvrir des bandes spectrales d'absorption comprise entre par exemple 0,4 µm et 1,1 µm. Afin d'éviter les effets électrochimiques et de ne pas augmenter la consommation électrique des cellules, on a utiliser de préférence des colorants non ioniques à solubilité élevée. C'est ainsi qu'on a utilisé avec succès dans le viisble le Bleu Indophénol, le Bleu Soudan et le Noir Soudan B. On peut également utiliser des colorants anthraquinones qui sont particulièrement stables. Pour obtenir une large bande d'absorption spectrale, on utilise des mélanges de plusieurs colorants on des superpositions de cellules, du type 10 et 20 décrit plus haut, contenant chacune un ou plusieurs colorants.

Le volume de fluide 1f2 ou 2f2 introduit dans une cellule est tel qu'il recouvre les électrodes de l'espace capillaire, voire même déborde légèrement pour chevaucher l'indentation du contour des électrodes, mentionnée précédemment. Le fluide placé dans l'espace capillaire est alors en contact avec les électrodes des réservoirs et peut être attiré plus facilement. Inversement, la disposition est la même lorsque le fluide est dans les réservoirs.

Les prismes 40 et 41 sont collés aux lames 31 et 32 de telle sorte qu'il y ait adaptation d'indice entre lames et prismes. Pour faciliter la réalisation, certains éléments peuvent être moulés, par exemple dans des résines acryliques telles que Polyméthyl metalcrylate (PMMA,"plexiglass").

Les connexions électriques vers le générateur 56 sont réalisees en prévoyant un prolongement, non représenté, aux lames transparentes et en y déposant, en même temps que les électrodes, des plages de connexion sur lesquelles on enfiche ensuite un connecteur, ou sur lesquelles on réalise des microsoudures.

L'atténuation d'une cellule telle que la cellule 1 est, selon la concentration du colorant introduit dans le fluide 1f2, de l'ordre de 10 %. On peut disposer au moins cinq cellules de ce type sans apporter d'atténuation néfaste lorsque toutes les celules sont passantes, c'est à dire non absorbantes.

L'atténuation de la cellule 30 est de l'ordre de 90 %.

La largeur L, mentionnée sur la figure 5, d'un tel modulateur est de 5 à 10 mm.

Avec une largeur de 10 mm on obtient un temps de fonctionnement, nécessité notamment pour le temps de déplacement du fluide, de l'ordre de 100 ms.

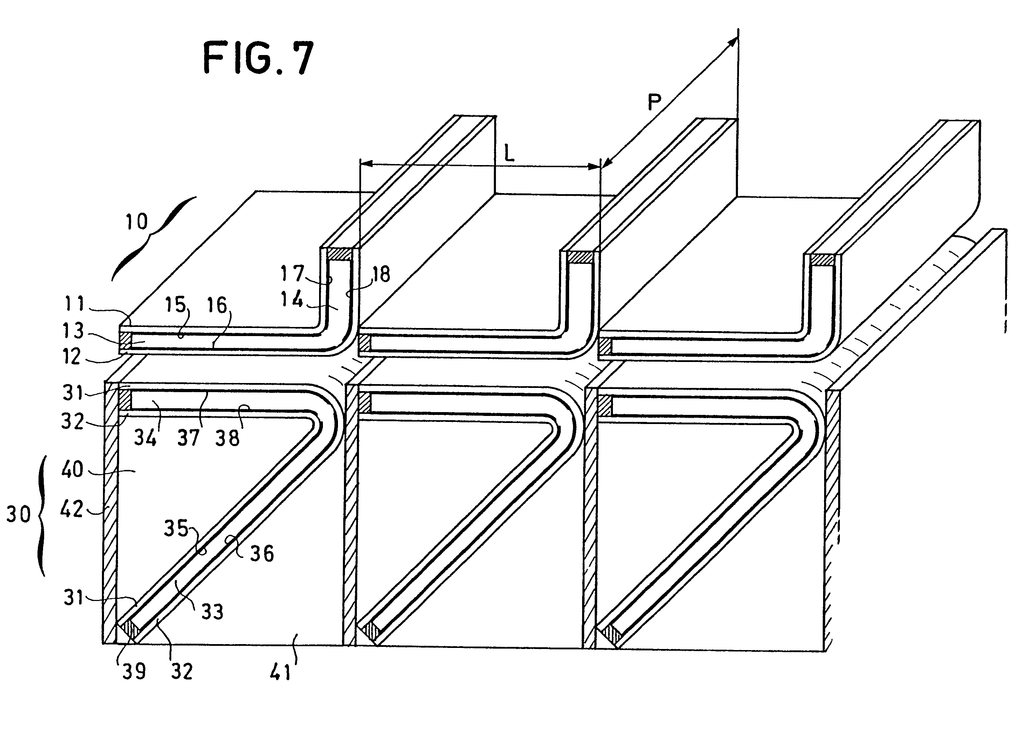

Pour couvrir une surface optique de 60 à 80 mm comme celà peut être le cas, l'association de plusieurs cellules permet si nécessaire de limiter l'épaisseur du dispositif et de conserver les performances de réponse en limitant la longueur du trajet effectué par le liquide. On constitue alors un réseau de modulateurs comme représenté par la vue isométrique de la figure 7.

Selon un premier plan on dispose des cellules 30 telles que les cellules 30 de la figure 5. Avec des cellules de largeur L = 10 mm, on dispose 7 à cellules selon le champ à couvrir. La longueur P des cellules est alors de 70 à 80 mm.

Selon un deuxième plan parallèle au premier on dispose des cellules 10 contenant un liquide absorbant. A titre de variante, sur la figure 7, ces cellules ne comportent qu'un seul réservoir 14 situé sur la droite de l'espace capillaire 13. Le fonctionnement d'une telle cellule est identique à celui des cellules décrites précédemment. La largeur L d'une cellule 10 étant également de 10 mm, on dispose, alignées avec les cellules 30, un même nombre de cellules, soit 7 à 8 cellules. La longueur P des cellules 10 est également de 70 à 80 mm.

Selon d'autres plans parallèles aux deux premiers on dispose des cellules telles que 10, pour obtenir, comme déjà décrit, différents grades de modulation de la lumière.

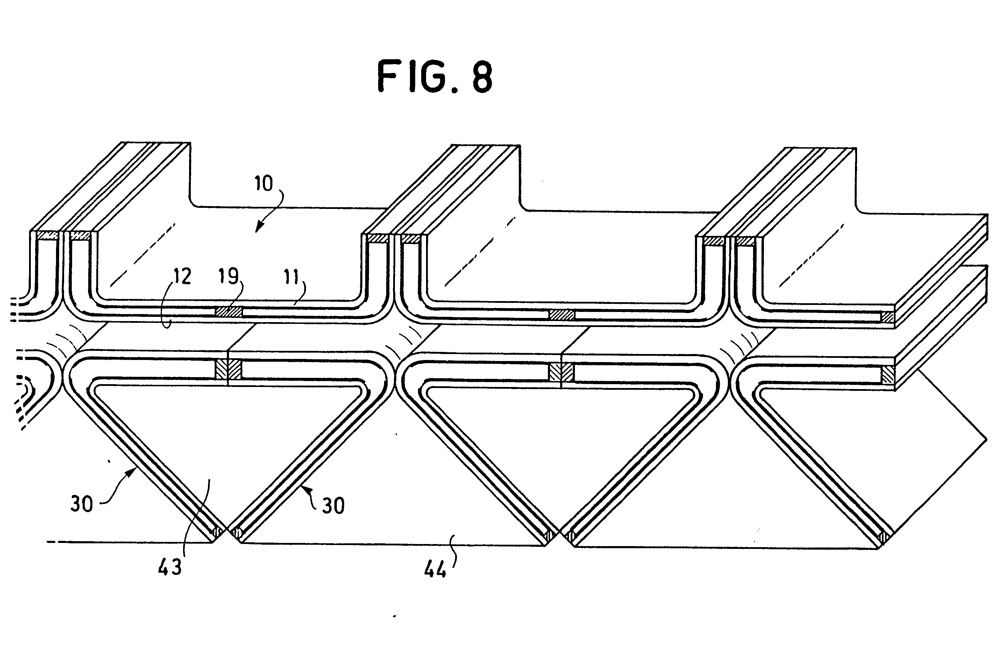

Les cellules 10 et 30 peuvent être associées deux à deux comme celà est représenté en figure 8.

Deux cellules 10 sont regroupées en une seule avec, l'une son reservoir à gauche, l'autre son réservoir à droite. Elles sont réalisées avec une seule lame 11 et une seule lame 12. Une entretoise 19 est prévue dans la partie centrale.

Selon le même axe que chacune de ces cellules sont placées deux cellules 30 dont les espaces capillaires forment un angle dièdre de $\frac{3}{2}$ radians. Dans ces conditions, les prismes 40 de ces deux cellules sont fabriqués en un seul prisme 43. De même, les prismes 41 de deux cellules adjacentes sont fabriqués en un seul prisme 44.

Lorsque les deux cellules sont réfléchissantes, avec le fluide 2f2 dans les réservoirs (34), un faisceau lumineux incident est réfléchi par la première cellule 30 vers la deuxième cellule 30, laquelle réfléchit la lumière vers la direction d'incidence. L'atténuation est alors réalisée. Cette disposition évite de prévoir les écrans absorbants 42 des figures 2 à 7.

Pour accroître les possibilités de modulation de l'intensité lumineuse moyenne d'un faisceau, l'invention prévoit que les circuits de commande 55 non seulement commandent indépendamment les différents plans de réseaux modulateurs mais aussi, commandent sélectivement chaque cellule dans chaque plan.

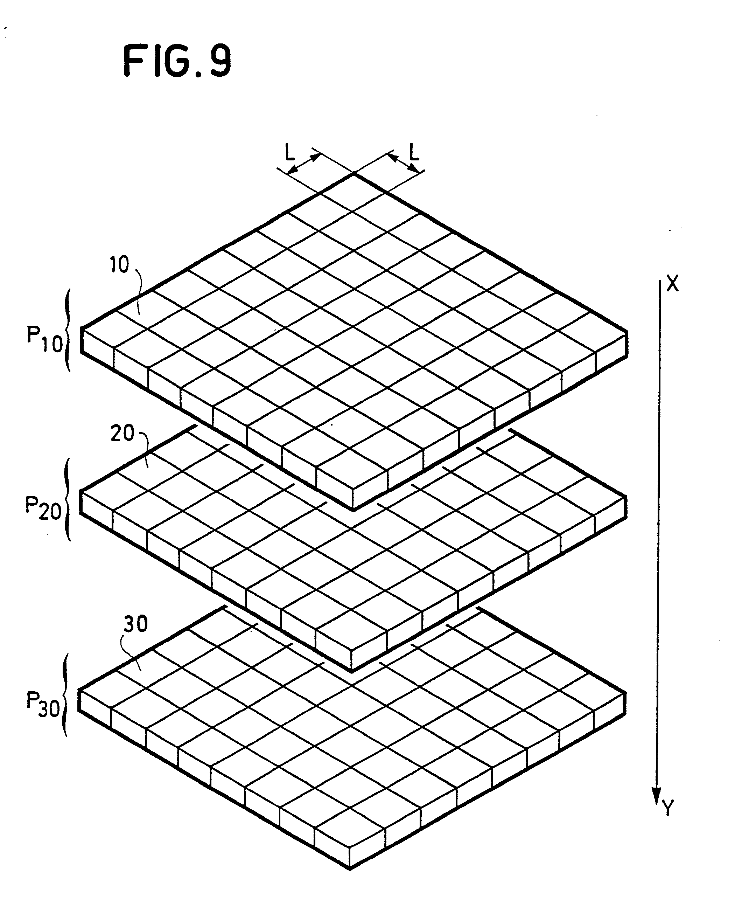

On prévoit alors d'utiliser des cellules de longueur égale à la largeur L. Comme représenté en figure 9, on dispose dans un plan P10 une matrice carrée de cellules 10. On réalise par exemple une matrice de 8 x 8 cellules. De la même façon on assemble des cellules 20 sous forme d'un plan P20 et des cellules 30 sous forme d'un plan P30. Les plans P10, P20 et P30 sont superposés de façon que les cellules de mêmes coordonnées dans les différents plans soient alignées selon un même axe parallèle à l'axe XY.

## Revendications

1. Modulateur optique d'un faisceau lumineux comprenant des cellules de déplacement de fluide par commande électrique constituées de deux lames transparentes parallèles délimitant un espace capillaire relié à un réservoir contenant au moins un fluide, ainsi que des dispositifs d'application de champs électriques permettant de commander le déplacement du liquide entre le réservoir et l'espace capillaire par effet diélectrique, le liquide se déplaçant de façon réversible d'une zone où n'existe pas ou plus le champ électrique vers une zone où on vient de l'établir, caractérisé en ce qu'il comprend au moins une cellule (10) d'un premier type dont les lames transparentes (11, 12) sont placées perpendiculairement à la direction du faisceau (50), l'espace capillaire (13) étant dans la section du faisceau et le fluide (1f2) de la cellule étant absorbant; des moyens de mesure (54) de l'intensité du faisceau lumineux fournissent à chaque instant un signal de mesure proportionnel à l'intensité du faisceau lumineux; ainsi que des moyens de commande (55, 56) des dispositifs d'application de champs électriques connectés aux moyens de mesure (54), recevant le signal de mesure et fournissant en réponse un signal permettant de commander les dispositfs d'application de champs électriques.

2. Modulateur optique selon la revendication 1, caractérisé en ce qu'il comprend au moins une cellule dudit premier type; une cellule d'un deuxième type dont les lames transparentes sont placées, dans un système de transmission optique, obliquement par rapport à la direction du faisceau lumineux, l'espace capillaire étant dans la section du faisceau et le liquide de la cellule étant transparent et de même indice de réfraction que le système optique de telle sorte que lorsque le liquide est dans l'espace capillaire le faisceau lumineux soit transmis sans déviation et que lorsque le liquide est dans le réservoir le faisceau soit dévié; les moyens de commande (55, 56) permettant de commander sélectivement en fonction de la valeur du signal de mesure les dispositifs d'application de champs électriques d'une ou plusieurs cellules du premier type et/ou du deuxieme type.

3. Modulateur optique selon la revendication 1, caractérisé en ce qu'il comporte plusieurs cellules (10) du premier type alignées selon le trajet du faisceau lumineux, les moyens de commande (55, 56) permettant de commander les dispositifs d'application de champs électriques de tout ou partie de ces cellules, de façon à avoir différents degrés de modulation du faisceau lumineux.

4. Modulateur optique selon la revendication 1, caractérisé en ce que le liquide absorbant des cellules du premier type comporte un mélange absorbant dans une gamme de longueurs d'ondes déterminée.

5. Modulateur optique selon la revendication 2, caractérisé en ce que le système optique comporte deux prismes triangulaires placés tête-bêche avec une face de chacun d'eux inclinée sur la direction du faisceau lumineux, la cellule du deuxième type étant placée entre les deux dites faces inclinées de telle façon qu'en présence du liquide transparent dans l'espace capillaire l'ensemble prismes et cellule transmette la lumière sans la dévier et qu'en l'absence du liquide capillaire, les parois intérieures des lamelles transparentes de la cellule devient la lumière.

6. Modulateur optique selon les revendications 2 ou 5 caractérisé en ce que la cellule (30) du deuxième type comprend deux lames tranparentes parallèles, comportant des dispositifs d'application d'un champ électrique (37, 38), placées perpendiculairement à la direction du faisceau lumineux, et délimitant un espace capillaire ou réservoir (34) situé dans la section du faisceau, ce réservoir (34) communiquant avec l'espace capillaire (33) délimité par les lames obliques (31, 32), les moyens de commande permettant de commander les dispositifs d'application de champs électriques pour déplacer le liquide transparent dudit espace capillaire (33) vers le réservoir (34) et inversement.

7. Modulateur optique selon les revendications 2 ou 5 caractérisé en ce que la cellule (30) du deuxième type comprend deux lames transparentes parallèles, comportant des dispositifs d'application d'un champ électrique (37, 38), placées parallèlement à la direction du faisceau lumineux, et délimitant un espace capillaire ou réservoir (34), ce réservoir (34) communiquant avec l'espace capillaire 33 délimité par les lames obliques (31, 32), les moyens de commande permettant de commander les dispositifs d'application de champs électriques pour déplacer le liquide transparent dudit espace capillaire (33) vers le réservoir (34) et inversement.

8. Modulateur optique selon l'une des revendications 1 à 3 et 5 à 7 caractérisé en ce que dans une cellule, l'écartement entre deux lames délimitant un réservoir (14, 34) est supérieur à l'écartement de deux lames délimitant l'espace capillaire (13, 33) de la même cellule.

9. Modulateur optique selon la revendication 6, caractérisé en ce que, selon une direction du faisceau lumineux perpendiculaire aux lames (31, 32) délimitant le réservoir (34), la distance parcourue par un rayon lumineux dans le réservoir (34) est égale à la distance parcourue par ce rayon dans l'espace capillaire (33).

10. Modulateur optique selon les revendications 1 ou 2, caractérisé en ce que les réservoirs (6) des cellules (10) du premier type sont placés de part et d'autre de l'espace capillaire (13) et parallèlement à la direction du faisceau lumineux.

11. Modulateur optique selon l'une des revendications 1, 2, 8 ou 10, caractérisé en ce que les cellules (10) du premier type comportent un seul réservoir (16) placé à une extrémité de l'espace capillaire (13).

12. Modulateur optique selon l'une quelconque des revendications précédentes, caractérisé en ce que l'on place plusieurs cellules (10) du premier type côte à côte dans un premier plan perpendiculaire à la direction du faisceau lumineux ainsi que plusieurs cellules (30) du deuxième type côte à côte dans un deuxième plan perpendiculaire à la direction du faisceau lumineux de façon à constituer des réseaux modulateurs englobant la totalité de la section du faisceau lumineux.

13. Modulateur optique selon la revendication 12 caractérisé en ce que les cellules (30) du deuxième type sont séparées par des écrans absorbants (42) parallèles à la direction du faisceau lumineux.

14. Modulateur optique selon la revendication 12 caractérisé en ce que les cellules (30) du deuxième type sont disposées de telle façon que les lames transparentes (31, 32) définissant l'espace capillaire (33) d'une cellule soient perpendiculaires aux lames homologues de la cellule voisine.

15. Modulateur optique selon l'une quelconque des revendications 12, 13 ou 14, caractérisé en ce que des moyens de commande (55, 56) permettent de commander, en fonction, du signal de mesure fourni par les moyens de mesure toutes les cellules d'un même plan de façon uniforme.

16. Modulateur optique selon l'une quelconques des revendications 12, 13, 14 ou 15, caractérisé en ce que des moyens de commande (55, 56) permettent de commander sélectivement, en fonction du signal de mesure, fourni par les moyens de mesure (54), tout ou partie des cellules d'un même plan de façon à obtenir une intensité moyenne du faisceau déterminée à la sortie du modulateur.

**Patentansprüche**

1. Optischer Modulator für einen Lichtstrahl, mit Zellen zur Verschiebung einer Flüssigkeit aufgrund einer elektrischen Steuerung, die aus zwei parallelen lichtdurchlassigen Blattchen bestehen, welche einen an ein mindestens eine Flüssigkeit enthaltendes Reservoir angeschlossenen Kapillarraum begrenzen, und mit Vorrichtungen zum Anlegen elektrischer Felder zur Steuerung der Verschiebung der Flüssigkeit zwischen dem Reservoir und dem Kapillarraum aufgrund eines dielektrischen Effekts, wobei sich die Flüssigkeit umkehrbar von einer Zone, in der das elektrische Feld nicht oder nicht mehr existiert, in eine Zone verlagert, in der das Feld gerade aufgebaut wurde, dadurch gekennzeichnet, daß mindestens eine Zelle (10) eines ersten Typs vorhanden ist, deren beide lichtdurchlässige Blättchen (11, 12) senkrecht zur Richtung des Strahls (50) angeordnet sind, wobei der Kapillarraum (13) im Strahlquerschnitt liegt und die Flüssigkeit (1f2) der Zelle lichtabsorbierende Wirkung besitzt, daß weiter Mittel (54) zur Messung der Lichtstärke des Strahls in jedem Augenblick ein Meßsignal proportional zur Lichtstärke des Strahls liefern und daß Steuermittel (55, 56) zur Steuerung der Vorrichtungen zum Anlegen elektrischer Felder vorgesehen sind, wobei die Steuermittel an die Meßmittel (54) angeschlossen sind, das Meßsignal zugeführt erhalten und in Antwort darauf ein Signal liefern, mit dem die Vorrichtungen zum Anlegen elektrischer Felder gesteuert werden können.

2. Optischer Modulator nach Anspruch 1, dadurch gekennzeichnet, daß mindestens eine Zelle des genannten ersten Typs und eine Zelle eines zweiten Typs vorgesehen sind, deren lichtdurchlässige Blättchen in einem optischen Übertragungssystem schräg bezüglich der Richtung des Lichtstrahls angeordnet sind, wobei der Kapillarraum im Querschnitt des Strahls liegt und die Flüssigkeit der Zelle transparent ist und denselben Brechungsindex wie das optische System besitzt, so daß der Lichtstrahl ohne Ablenkung übertragen wird, wenn sich die Flüssigkeit im Kapillarraum befindet, während der Lichtstrahl abgelenkt wird, wenn sich die Flüssigkeit im Reservoir befindet, und daß Steuermittel (55, 56) vorgesehen sind, mit denen abhängig vom Wert des Meßsignals die Vorrichtungen zum Anlegen elektrischer Felder einer oder mehrerer Zellen des ersten Typs und/oder des zweiten Typs selektiv gesteuert werden können.

3. Optischer Modulator nach Anspruch 1, dadurch gekennzeichnet, daß er mehrere Zellen (10) des ersten Typs aufweist, die entlang des Verlaufs des Lichtstrahls aufgereiht sind, wobei die Steuermittel (55, 56) die Vorrichtungen zum Anlegen elektrischer Felder aller Zellen oder eines Teils davon zu steuern vermögen, so daß sich unterschiedliche Modulationsgrade des Lichtstrahls ergeben.

4. Optischer Modulator nach Anspruch 1, dadurch gekennzeichnet, daß die absorbierende Flüssigkeit der Zellen des ersten Typs aus einer Mischung besteht, die in einem bestimmten Wellenlängenbereich Lichtenergie absorbiert.

5. Optischer Modulator nach Anspruch 2, dadurch gekennzeichnet, daß das optische System zwei Dreiecksprismen enthält, die umgekehrt zueinander angeordnet sind, wobei eine der Seiten jedes Prismas zur Richtung des Lichtstrahls geneigt ist und die Zelle vom zweiten Typ zwischen den geneigten Seiten liegt, derart, daß die aus den Prismen und der Zelle gebildete Einheit das Licht ohne Ablenkung durchläßt, wenn die lichtdurchlässige Flüssigkeit sich im Kapillarraum befindet, während die Innenwände der lichtdurchlässigen Blättchen das Licht ablenken, wenn die Flüssigkeit sich nicht im Kapillarraum befindet.

6. Optischer Modulator nach den Ansprüchen 2 oder 5, dadurch gekennzeichnet, daß die Zelle (30) des zweiten Typs zwei parallele lichtdurchlässige Blättchen enthält, die Vorrichtungen (37, 38) zum Anlegen eines elektrischen Feldes besitzen, senkrecht zur Richtung des Lichtstrahls angeordnet sind und einen Kapillarraum oder ein Reservoir (34) begrenzen, der bzw. das im Querschnitt des Lichtstrahls liegt und mit dem von den schrägliegenden Blättchen (31, 32) begrenzten Kapillarraum (33) in Verbindung steht, wobei die Steuermittel die Vorrichtungen zum Anlegen· elektrischer Felder zu steuern vermögen, um die lichtdurchlässige Flüssigkeit vom Kapillarraum (33) zum Reservoir (34) und umgekehrt zu verschieben.

7. Optischer Modulator nach den Ansprüchen 2 oder 5, dadurch gekennzeichnet, daß die Zelle (30) vom zweiten Typ zwei parallele lichtdurchlässige Blättchen aufweist, die Vorrichtungen (37, 38) zum Anlegen eines elektrischen Feldes besitzen, parallel zur Richtung des Lichtstrahls angeordnet sind und einen Kapillarraum oder ein Reservoir (34) begrenzen, der bzw. das mit dem durch die schrägliegenden Blättchen (31, 32) begrenzten Kapillarraum (33) in Verbindung steht, wobei die Steuermittel die Vorrichtungen zum Anlegen elektrischer Felder zu steuern vermögen, um die lichtdurchlässige Flüssigkeit von dem Kapillarraum (33) zum Reservoir (34) und umgekehrt zu verschieben.

8. Optischer Modulator nach einem der Ansprüche 1 bis 3 und 5 bis 7, dadurch gekennzeichnet, daß der Abstand zwischen zwei ein Reservoir (14, 34) begrenzenden Blättchen in einer Zelle größer als der Abstand zwischen zwei den Kapillarraum (13, 33) derselben Zellen begrenzenden Blättchen ist.

9. Optischer Modulator nach Anspruch 6, dadurch gekennzeichnet, daß der von einem Lichtstrahl im Reservoir (34) zurückgelegte Weg gemäß einer Richtung des Lichtstrahls senkrecht zu den das Reservoir (34) begrenzenden Blättchen (31, 32) gleich dem von diesem Lichtstrahl im Kapillarraum (33) zurückgelegten Weg ist.

10. Optischer Modulator nach den ansprüchen 1 oder 2, dadurch gekennzeichnet, daß die Reservoire (6) der Zellen (10) vom ersten Typ zu beiden Seiten des Kapillarraums (13) und parallel zur Richtung des Lichtstrahls angeordnet sind.

11. Optischer Modulator nach einem der Ansprüche 1, 2, 8 oder 10, dadurch gekennzeichnet, daß die Zellen (10) des ersten Typs ein einziges Reservoir (16) aufweisen, das an einem Ende des Kapillarraums (13) liegt.

12. Optischer Modulator nach einem beliebigen der vorhergehenden Ansprüche, dadurch gekennzeichnet, daß mehrere Zellen (10) vom ersten Typ Seite an Seite in einer ersten zur Richtung des Lichtstrahls senkrechten Ebene angeordnet werden und mehrere Zellen (30) des zweiten Typs Seite an Seite in einer zweiten senkrecht zur Richtung des Lichtstrahls verlaufenden Ebene angeordnet sind, um Modulatornetze zu bilden, die die ganze Querschnittsfläche des Lichtstrahls umfassen.

13. Optischer Modulator nach Anspruch 12, dadurch gekennzeichnet, daß die Zellen (30) vom zweiten Typ durch absorbierende Schirme (42), die parallel zur Richtung des Lichtstrahls verlaufen, voneinander getrennt sind.

14. Optischer Modulator nach Anspruch 12, dadurch gekennzeichnet, daß die Zellen (30) vom zweiten Typ so angeordnet sind, daß die lichtdurchlässigen Blättchen (31, 32), die den Kapillarraum (33) einer Zelle definieren, senkrecht zu den entsprechenden Blättchen der Nachbarzelle angeordnet sind.

15. Optischer Modulator nach einem beliebigen der Ansprüche 12, 13 oder 14, dadurch gekennzeichnet, daß Steuermittel (55, 56) alle Zellen einer Ebene abhängig vom durch die Meßmittel gelieferten Meßsignal in gleichförmiger Weise zu steuern vermögen.

16. Optischer Modulator nach einem beliebigen der Ansprüche 12, 13, 14 oder 15, dadurch gekennzeichnet, daß Steuermittel (55, 56) alle Zellen einer Ebene oder einen Teil davon selektiv abhängig vom durch die Meßmittel (54) gelieferten Meßsignal zu steuern vermögen, so daß sich eine bestimmte mittlere Strahlstärke am Ausgang des Modulators ergibt.

## Claims

1. An optical modulator for modulating a light beam, comprising electrically controlled fluid displacement cells consisting of two parallel transparent dices which make up a capillary interspace connected to a reservoir containing at least one fluid, and comprising electric field application devices conceived to control the shift of liquid between the reservoir and the capillary interspace due to a dielectric effect, the liquid being shifted in a reversible manner from a zone in which the electric field does not or not any more exist, towards a zone in which the field has just been established, characterized in that the modulator includes at least one cell (10) of a first type, the transparent dices (11, 12) of which are placed perpendicularly to the direction of the beam (50), the capillary interspace (13) being located in the cross-section of the beam and the fluid (1f2) of the cell being a light absorbing fluid, that means (54) for measuring the light beam intensity supply at any moment a measuring signal proportional to the intensity of the light beam, and that means (55, 56) for controlling the electric field application devices are provided which are connected to the measuring means (54), receive the measuring signals and supply in response a signal allowing the control of the electric field application devices.

2. An optical modulator according to claim 1, characterized in that it comprises at least one cell of the first type and one cell of a second type, the transparent dices of which are placed in an optical transmission system obliquely with respect to the light beam direction, the capillary interspace being located in that cross-section of the beam and the liquid of the cell being transparent and having the same refraction index as the optical system such that the light beam is transmitted without deviation, if the liquid is present in the capillary interspace, whereas the beam is deviated, if the liquid is in the reservoir, the control means (55, 56) allowing to control selectively, in dependence of the value of the measuring signal, the electric field application devices of one or a plurality of first type and/or second type cells.

3. An optical modulator according to claim 1, characterized in that it includes a plurality of cells (10) of the first type aligned along the path of the light beam, the control means (55, 56) allowing to control the electric field application devices of all cells or part thereof such that different modulation degrees of the light beam are achieved.

4. An optical modulator according to claim 1, characterized in that the absorbing liquid of the first type cells comprises a mixture having absorbing effect in a predetermined range of wavelengths.

5. An optical modulator according to claim 2, characterized in that the optical system comprises two triangular prisms placed antiparallelly with one face of each prism being inclined with respect to the light beam direction, the second type cell being located between said two inclined surfaces such that the assembly constituted by the prisms and the cells transmits light without deviation in the presence of transparent liquid in the capillary interspace whereas in the absence of this liquid in the capillary interspace, the inner walls of the transparent dices of the cell deviate the light.

6. An optical modulator according to claim 2 or 5, characterized in that the second type cell (30) comprises two parallel transparent dices with electric field application device (37, 38), these dices being located perpendicularly to the light beam direction and making up a capillary interspace or reservoir (34) located in the cross-section of the beam, this reservoir (34) communicating with the capillary interspace (33) made up by the oblique dices (31, 32), the control means allowing to control the electric field application devices in order to shift the transparent liquid from said capillaryinterspace (33) towards the reservoir (34) and vice-versa.

7. An optical modulator according to claims 2 or 5, characterized in that the second type cell (30) comprises two parallel transparent dices including electric field application devices (37, 38), these dices being placed parallelly to the light beam direction and making up a capillary interspace or reservoir (34), this reservoir (34) communicating with the capillary interspace (33) made up by the oblique dices (31, 32), the control means allowing to control the electric field application devices in order to shift the transparent liquid from said capillary interspace (33) towards the reservoir (34) and vice-versa.

8. An optical modulator according to one of claims 1 to 3 and 5 to 7, characterized in that in one cell, the distance between two dices making up a reservoir (14, 34) is greater than that between two dices making up the capillary interspace (13, 33) in this very cell.

9. An optical modulator according to claim 6, characterized in that along a light beam direction perpendicular to the dices (31, 32) making up the reservoir (34), the path of a light beam in the reservoir (34) has the same length as the path of this beam in the capillary interspace (33).

10. An optical modulator according to claims 1 or 2, characterized in that the reservoirs (6) of the first type cells (10) are placed on both sides of the capillary interspace (13) and parallelly to the light beam direction.

11. An optical modulator according to one of claims 1 to 8 or 10, characterized in that the first type cells (10) include a unique reservoir (16) located at the end of the capillary interspace (13).

12. An optical modulator according to any one of the preceding claims, characterized in that a plurality of first type cells (10) is arranged side by side in a first plane perpendicular to the light beam direction and that a plurality of second type cells (30) is arranged side by side in a second plane perpendicular to the light beam direction, such that modulator networks are obtained covering the entire light beam cross-section.

13. An optical modulator according to claim 12, characterized in that the second type cells (30) are separated by absorbing screens (42) disposed parallelly to the light beam direction.

14. An optical modulator according to claim 12, characterized in that the second type cells (30) are arranged in such a manner that the transparent dices (31, 32) defining the capillary interspace (33) of a cell are disposed perpendicularly to the corresponding dices of the adjacent cell.

15. An optical modulator according to any one of claims 12, 13 or 14, characterized in that the control means (55, 56) are conceived to control all the cells of a common plane in a uniform manner in dependance of the measuring signal supplied by the measuring means.

16. An optical modulator according to any one of claims 12, 13, 14 or 15, characterized in that the control means (55, 56) are conceived to control selectively all the cells of a common plane, or part thereof, in dependance of the measuring signal supplied by the measuring means (54), in order to obtain at the output of the modulator a predetermined mean beam intensity.

# FIG.1

0 141 714

**0 141 714**

**FIG. 2**

3

FIG.3

# FIG.4

# FIG. 5

# FIG. 6

FIG.7

# FIG. 8

10

12  19  11

30  30

43  44

15

0 141 714

# FIG.9